# EUROPÄISCHE PATENTANMELDUNG

(11) **EP 1 909 232 A1**
(43) Veröffentlichungstag der Anmeldung: **09.04.2008**
(21) Anmeldenummer: 06405431.5
(22) Anmeldetag: 08.10.2006
(51) Int. Cl.: G07B 17/00, G06Q 10/00, B07C 3/18

(54) **Verfahren zum Versand von Gegenständen**

(71) Anmelder: FRAMA AG, 3438 Lauperswil (CH)
(72) Erfinder: Haug, Thomas Peter, 3550 Langnau i.E. (CH)
(74) Vertreter: Fenner, Werner

(57) **Zusammenfassung**

Ein Verfahren zum Versand von Gegenständen und/oder Gütern, die über eine durch ein organisiertes Frankiersystem für das Anbringen einer wenigstens teilweise codierten Kennung oder zur Freistempelung ausgebildete Aufgabestelle (4) an einen Zustelldienst (7 bis 10) zum Transport der Gegenstände an einen entfernten Bestimmungsort übergeben werden, zeichnet sich dadurch aus, dass der Versand resp. die Zustellung der Gegenstände mittels einem von durch aufbereitete Daten eines Informationssystems unterstützten Leitfunktionen ausgestatteten Frankiersystem erfolgt.

Bei einer Einrichtung zum Versand von mit einer wenigstens teilweise codierten Kennung versehenen Gegenständen und/oder Gütern, die von einer mit einer Frankiermaschine (3) ausgestatteten Aufgabestelle (4) aus mittels wenigstens eines zu beauftragenden Zustelldienstes (7 bis 10) an einen entfernten Bestimmungsort verschickt werden, ist die Frankiermaschine (3) zur Versandabwicklung mit einer Daten eines Zustelldienstes (7 bis 10) verarbeitenden, Versanddaten für die Frankiermaschine (3) generierenden Informationseinrichtung (6) in Verbindung bringbar.

## Beschreibung

Die Erfindung betrifft ein Verfahren zum Versand von Gegenständen und/oder Gütern, die über eine durch ein Frankiersystem für das Anbringen einer wenigstens teilweise codierten Kennung ausgebildete Aufgabestelle an einen Zustelldienst zum Transport der Gegenstände an einen entfernten Bestimmungsort übergeben werden.

Für eine codierte Kennung ist beispielsweise auch der Begriff Freistempelung mittels eines Datenmatrix-Codes bekannt.

Die Erfindung betrifft weiterhin eine Einrichtung zum Versand von Gegenständen und/oder Gütern, mit Kommunikationsmitteln und Mitteln zum Transport der Versandgegenstände von einer ein Frankiersystem oder eine Frankiermaschine aufweisenden Aufgabestelle aus, mittels wenigstens eines beauftragten Zustelldienstes, an einen von dieser entfernten Bestimmungsort.

Der Versand von Gegenständen von einer Aufgabestelle an einen entfernt liegenden Bestimmungsort erfolgte bisher beispielsweise auf einem bekannten Versand- oder Transportweg von der Aufgabestelle über ein offizielles resp. nationales Postamt oder geeigneten Versandunternehmen, mit verfügbaren Transportmitteln, auch über mehrere Zwischen- und/oder Umladestationen resp. Transportunternehmen, wobei die Aufgabestelle zur versandfertigen Aufbereitung mit einem Frankiersystem bzw. einer Frankiermaschine ausgerüstet sein kann.

An der Aufgabestelle werden die in Form von Briefen, Umschlägen, Karten, Paketen oder Kisten vorkommenden Versandgegenstände und/oder Güter nach Bestimmungsort, Format und/oder Gewicht entsprechend frankiert bzw. mit postalischen Wertzeichen versehen resp. teilweise versandbereit gemacht. Anschliessend werden die Versandgegenstände durch eigene oder fremde Transportmittel an eine nächstliegende Post- resp. Versandstelle gebracht, wo die Versandgegenstände mit die Transport- und Zustellkosten deckenden Wertzeichen und/oder Versandformularen ausgestattet und an Transport-, Liefer- und/oder Zustelldienste weitergegeben werden. Die Transport-, Liefer- und/oder Zustelldienste erheben anschliessend den erbrachten Leistungen entsprechende tarif- oder gebührenähnliche Forderungen gegenüber den die Transport- und Zustellkosten vereinnehmenden Post- resp. Versandstellen.

Bei einem anderen bekannten Versandprinzip werden die Versandgegenstände nach dem Zielort, dem Format und/oder Gewicht bis zur Frankatur mit eigenen Mitteln durch teilweise codierte Markierungen versandfertig vorbereitet oder bereitgestellt und anschliessend nach Auftragserteilung von einem Kurierdienst abgeholt und von diesem von der Aufgabestelle resp. dem Bereitstellungsort an einen ersten Bestimmungsort resp. Etappenort weitergegeben. Dabei spielt der Kurierdienst eine Generalunternehmerrolle und es werden verfügbare Kommunikations- und Transportmittel eingesetzt. Bei der Uebernahme eines Versandauftrages stehen einem Absender von Versandgütern vom Kurierdienst vorbereitete, im Voraus auszufüllende Formulare (Vordruckformulare) und Mittel zur Verfügung, die einen relativ hohen bürokratischen und manuellen Aufwand erfordern und nicht mit verfügbaren neuzeitlichen Kommunikationsmittel bearbeitet werden.

Das bekannte Unternehmen UPS übernimmt Versandaufträge und stellt dem Auftraggeber zur Abwicklung über Internet auf einem Bildschirm vorgedruckte Formulare zur Verfügung, auf denen Angaben des Kunden zu dessen Identifikation, Art des Versandgegenstandes, Destination, Name und Adresse des Empfängers zu vermerken sind. Der Auftraggeber stellt den Gegenstand, auch mit Hilfe der UPS, die den Gegenstand abholt, versandfertig bereit. Der weitere Verlauf des Transports bleibt nurmehr von UPS überwacht resp. kontrolliert.

Solche Vorgehensweisen zum Versand von Gegenständen erweisen sich bei der Versandvorbereitung und Durchführung als umständliche und schwerfällige Systeme, und aufgrund mehrerer Anlaufstellen zwischen Aufgabestelle und Bestimmungsort sind die Gegenstände auf dem Versandweg ungenügend oder nur mit erheblichem Aufwand kontrollierbar resp. nur mit einem hohen Arbeits- und Kostenaufwand verfolgbar und es wird kaum Gebrauch gemacht, von sich zum Einsatz anbietenden fortschrittlichen technischen Kommunikationsmitteln. Die bekannten Vorgehensweisen sind hinderlich für eine wirtschaftliche und zuverlässige Durchführung eines Versandprozesses.

Es stellt sich somit an die Erfindung die Aufgabe, ein Verfahren und eine Einrichtung zum Versand von Gegenständen vorzuschlagen, welche unter Verwendung von Frankiersystemen resp. Frankiermaschinen ein vereinfachtes Versandprinzip mit geringerem manuellem Arbeits- und Administrationsaufwand gestatten.

Die Erfindung geht neue Wege, indem bei einem Verfahren der eingangs genannten Art, die Zustellung resp. der Transport von Gegenständen über ein mit Leitfunktionen ausgestattetes Frankiersystem bestimmt resp. abgewickelt wird.

Damit wird der Versand kunden- resp. anwenderfreundlicher und auch umfassender und kann von einer zentralen Stelle resp. von der Aufgabestelle aus bis zum Ziel durch sog. Track- and Trace-Informationen gesteuert und kontrolliert werden.

Die Aufgabestelle ist sinngemäss für eine Zeit- und Tarifoptimierung im Versand von Gütern aller Art besorgt.

Es lassen sich dadurch von einer Stelle resp. einer Aufgabestelle aus, die nicht zwingend Standort des Frankiersystems ist, ein momentaner Standort eines Versandgegenstandes feststellen und weiterverfolgen und die Verrechnung eines Versandauftrages durchführen.

Damit kann der Nutzen eines Frankiersystems erheblich erweitert, ein grösseres Kommunikationsgebiet geschaffen, und intensiviert resp. bearbeitet werden; es können die Verbindungen und der Verkehr verbessert und die Kosten exakter erfasst und für das Budgetieren berechnet werden. Letztlich wird über dieses System resp. das benutzte Frankiersystem eine höhere Zuverlässigkeit und Vereinfachung des Versands von Gegenständen erreicht.

Für eine wenigstens teilweise codierte Kennung von zum Versand bestimmten Gegenständen und/oder Gütern können Barcode, programmierbare Chips, beispielsweise speicherfähige RFID (radio frequency ID) Chips verwendet werden. Chips können auch aufgeklebt oder anderswie befestigt werden.

Mit der Anbringung einer Kennung wird die Aufgabestelle der Gegenstände automatisch identifiziert, wodurch eine weltumspannte Ueberwachung eines Auftrages möglich wird.

Die Aufgabestelle zeichnet sich u.a. dadurch aus, dass sie über ein Frankiersystem verfügt, das mit dem Internet verbunden ist.

Zwischen Aufgabestelle und Zustelldienst könnte ein Abholdienst oder Zubringdienst , beispielsweise ein Kurierdienst, für die zu versendenden Gegenstände und/oder Güter eingerichtet werden, der die Zustelldienste bedient.

Das System gestattet auch Zusammenschlüsse durch Verbindungen mehrerer Unternehmen zu einer gemeinsamen Einrichtung.

Hierzu trägt ein dem Frankiersystem zuschaltbares resp. ein mit diesem verbundenes, wenigstens Informationen aus Daten eines Zustelldienstes generierendes und an das Frankiersystem übertragendes resp. abgebendes Informationssystem entscheidend bei. Die Verbindung zwischen Frankiersystem und Informationssystem kann durch eine für das Frankiersystem erteilte Identifikationsnummer oder Lizenznummer entstehen, die beispielsweise vom Informationssystem vergeben wird.

Der Austausch von Daten und/oder Informationen zwischen Informationssystem, Frankiersystem und Zustelldiensten kann aus Sicherheitsgründen verschlüsselt erfolgen.

Nach durchgeführter Bearbeitung eines Versandauftrages mit dem Frankiersystem wird der Auftrag einem oder mehreren Zustelldiensten erteilt; dies kann direkt von dem Frankiersystem an die Zustelldienste oder über das Informationssystem erfolgen. Die Auslösung oder Ingangsetzung eines Versandauftrages geschieht durch das Frankiersystem automatisch oder manuell über eine One-Touch-Funktion resp. eine Funktionstaste.

Diese Vorgehensweise erübrigt das bisherige Ausfüllen von Fomularen, spart Arbeitszeit, schafft eine schnellere Auftragsübermittlung resp. -abwicklung und eine grössere Zuverlässigkeit in der Durchführung.

Es wird durch die elektronische Datenübermittlung eine eindeutige Anweisung zur Auftragsdurchführung erreicht.

Das Informationssystem, als Datenverarbeitungs- und Leitzentrum ausgebildet, stellt den Zustelldiensten vorzugsweise optimierte Daten oder Grundlagen zur Datenerfassung zur Verfügung, die über das Frankiersystem abfragbar und/oder verfügbar und zur Steuerung des Versandverfahrens benutzbar sind. Deshalb ist das Informationssystem mit einem rechenfähigen Steuerungs- und Abfrageprogramm ausgestattet und mit dem Frankiersystem sowie den am Versand von Gegenständen und/oder Gütern beteiligten Zustell- resp. Dienstleistungsbetrieben zur Datenübertragung verbunden.

Zweckmässig sind an das Informationssystem über Datenverbindungsleitungen von der Frankiermaschine resp. von der Aufgabestelle aus, für den Versand von Gegenständen und/oder Gütern abrufbare Daten eines Zustelldienstes übertragbar, die es erlauben, den Verlauf resp. die Abwicklung des Versandes eines Gegenstandes von einer Stelle aus, beispielsweise der Aufgabestelle vorzubereiten, zu bestimmen resp. zu initiieren und abzuwickeln.

Es erweist sich als vorteilhaft, wenn die Daten zwischen Frankiersystem, Informationssystem und/oder Zustelldiensten mittels Leitungsverbindung uni- oder bidirektional übertragbar resp. austauschbar sind.

Im Sinne einer optimierbaren Nutzung von rechenfähigen Datenverarbeitungssystemen erweist es sich als zweckmässig, wenn die von dem Informationssystem auf das Frankiersystem und umgekehrt übertragenen Daten durch das Informations und/oder Frankiersystem veränderbar resp. korrigierbar sind.

Das Informationssystem ist zweckmässig mit einem rechenfähigen elektronischen Steuerprogramm ausgestattet, von dem Daten verarbeitbar, abrufbar, generierbar und auf das Frankiersystem und/oder ein Rechensystem eines resp. der Zustelldienste übertragbar sind.

Zur Bildung eines einen Versandgegenstand begleitenden Labels oder einer Etikette können in dem Informationssystem verfügbare oder von diesem generierte resp. für den Versand zur Verfügung gestellte Daten von dem Frankiersystem aufgrund eines Versandauftrages angefordert, empfangen und verarbeitet werden, sowohl für den Brief- wie auch den Paket- und Güterversand.

Es besteht vorzugsweise die Möglichkeit, zwischen dem Frankiersystem und einem Zustelldienst Daten zu übertragen bzw. auszutauschen.

Zur Gewährleistung einer kontinuierlichen Abwicklung eines Versandauftrages ist es vorteilhaft, wenn die Zustelldienste mit einem die Versandgegenstände an der Aufgabestelle entgegennehmenden Abhol- resp. Zubringdienst ausgestattet sind oder wenn dazu ein verfügbarer (regionaler) Kurierdienst mit einem Fuhrpark vorgesehen ist.

Im Sinne einer verbreiteten und wirtschaftlichen Nutzung kann das Informationssystem an mehrere Frankiersysteme angeschlossen werden.

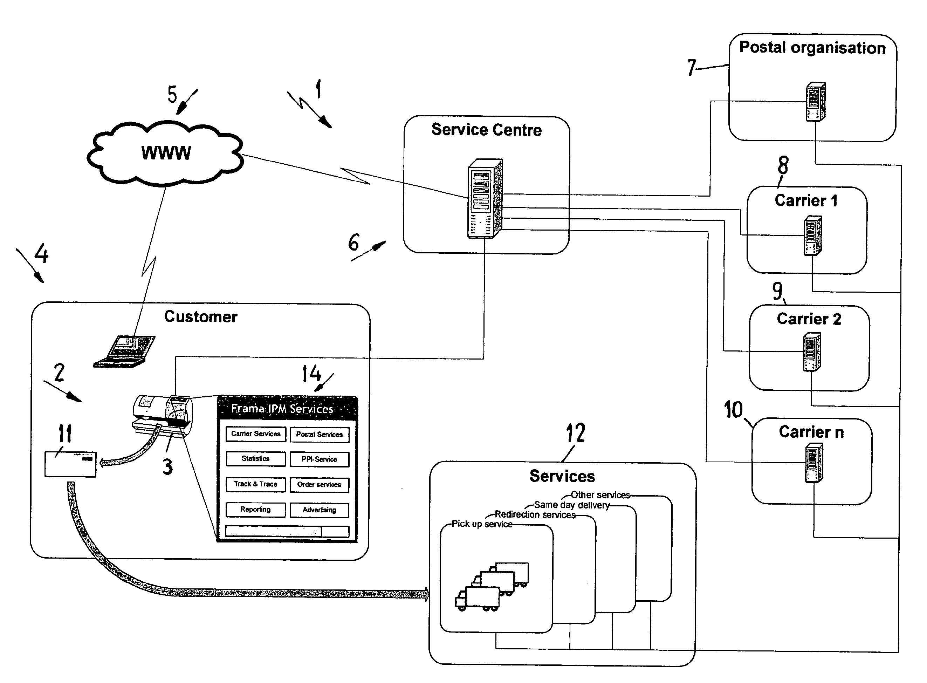

Anschliessend wird die Erfindung unter Bezugnahme auf eine Zeichnung, auf die bezüglich aller in der Beschreibung nicht näher erwähnten Einzelheiten verwiesen wird, anhand eines Ausführungsbeispiels erläutert. In der
- einzigen Figur: ist anhand eines Schemas ein erfindungsgemässes Verfahren und eine entsprechende Einrichtung zur Abwicklung des Versands von Gegenständen mittels einem Frankiersystem dargestellt.

In der einzigen Figur ist ein Verbundnetz zum Versand von Gegenständen, wie beispielsweise Briefe, Dokumente oder dgl. und/oder Pakete, zur Kommunikation und für einen weltweiten Verkehr mit Gütern aller Art dargestellt.

Ausgangspunkt kann ein installiertes Frankiersystem 2 mit einer Frankiermaschine 3 sein. Diese ist in eine, beispielsweise personell besetzte Aufgabestelle 4 integriert, kann jedoch auch ausserhalb einer solchen sich befinden, in der die zum Versand vorgesehenen Drucksachen, Briefe, Waren, Gegenstände und/oder Güter bereitgestellt und versandbereit gemacht werden. Dem Frankiersystem steht eine eigene Internet-Schnittstelle 5 resp. eine Telefon- bzw. Kommunikationsverbindung zur Verfügung, mit der das Frankiersystem über eine Leitung 12 mit einem als Verarbeitungs- und Leitsystem ausgebildeten Informationssystem 6 verbunden resp. online verbunden ist. Das Informationssystem 6 steht weiterhin mit mehreren Zustelldiensten 7 bis 10 in Verbindung, welche Dienstleistungen zum Versand von Gütern sowie eine Auswahl Transportmöglichkeiten,Tarife zur Kalkulation und Verrechnung der Dienstleistungen anbieten und vorzugsweise über einen Abholdienst 12 zur Uebernahme der Gegenstände 11 an der Aufgabestelle 4 verfügen.

Ueber die Verbindung mit dem Informationssystem 6 können durch dieses Versand und/oder Frachtkosten aus Daten und Informationen eines oder mehrerer Zustelldienste generiert auf das Frankiersystem übertragen und dort verglichen und benutzt werden, sodass die gesammten Versandkosten kalkulierbar und für einen abzuwickelden Versand bestimmbar sind.

Hierzu besteht zwischen Frankiersystem, Informationssystem und Zustelldiensten eine online oder aufbaubare Verbindungsleitung. Selbstverständlich sind in den betroffenen Stationen entsprechend vernetzte Rechner installiert, von denen Versand- oder Transportdaten abrufbar sind.

Dadurch ist es möglich, an der Aufgabestelle resp. durch das Frankiersystem die Art des Versandes, die Durchführung sowie diejenigen Kosten zu errechnen, zu bestimmen, zu vergleichen und später zu verrechnen, die durch den Transport von der Aufgabestelle bis zum bestimmten Ziel entstehen bzw. verursacht worden sind.

Das Frankiersystem verfügt vorteilhaft über einen mit dem Informationssystem verbundenen Rechner, sodass es möglich ist, Informationen oder Daten des Informationssystems mittels einer Schnittstelle auch über das Internet abzurufen.

Von einem an der Aufgabestelle eintreffenden Versandauftrag werden in einer Frankiermaschine 3 des Versandsystems die zum Versand erforderlichen Identifikations- und Destinationsdaten aufgenommen. Dem Versandauftrag wird sodann von dem Informationssystem resp. der Informationseinrichtung eine Auftrags- resp. eine Trackingnummer zugeteilt, durch die ein Auftrag auf dem Versandweg verfolgbar ist.

Ein Display resp. ein Bildschirm 14 der Frankiermaschine 3 als graphische Benutzerführung ausgebildet, beispielsweise mit Tastatur und Maus oder Touchsreen, erlaubt eine organisatorische Auftragsabwicklung eines Versandauftrages durch das Frankiersystem von der Aufgabestelle aus bis zum Bestimmungsort unter Zuhilfenahme von abrufbaren Daten oder Informationen des Informationssystems.

Der Bildschirm der Frankiermaschine kann zu diesem Zweck ein Bedienermenü anzeigen, über welches vom Informationssystem generierte und dort gespeicherte Track- & Trace-Informationen, Versandberichte, Auftragsbestätigungen, Infos der Zustelldienste, Abrechnungsprotokolle etc. abrufbar sind. Die einzige Figur stellt in einem separaten Feld verschiedene beispielhafte Möglichkeiten der Verwendung dar.

Der Verlauf eines Versandauftrages bleibt durch eine mögliche Verfolgung bis zum Bestimmungsort überwacht und durch Rückmeldungen über das Informationssystem kann ein momentaner Standort mittels Frankiersystem festgestellt werden. Die Ueberprüfung des Standortes braucht nicht zwingend an der Aufgabestelle festgestellt zu werden, denn das Informatinssystem kann über das Frankiersystem beispielsweise durch die entsprechende Trackingnummer von einer abgelegenen anderen Stelle aus erreicht werden. Ein Brief von einer schweizerischen Aufgabestelle nach einem Zielort in Japan kann durch das vorgeschlagene Versandsystem an einer eingerichteten Zollabfertigungsstelle am Flughafen Zürich, auf dem Flug, an dem bestimmten Flughafen in Japan, auf dem Schienenverkehrsweg, an dem Hauptverteil- oder einem Verteilzentrum bis zum Empfänger in Japan verfolgt und durch Rückmeldungen bestätigt werden.

## Patentansprüche

1. Verfahren zum Versand von Gegenständen und/oder Gütern, die über eine durch ein Frankiersystem für das Anbringen einer wenigstens teilweise codierten Kennung ausgebildete Aufgabestelle an wenigstens einen Zustelldienst zum Transport der Gegenstände an einen entfernten Bestimmungsort übergeben werden, **dadurch gekennzeichnet, dass** der Versand resp. die Zustellung von Gegenständen mittels einem von durch aufbereitete Daten eines Informationssystems unterstützten Leitfunktionen ausgestatteten Frankiersystem erfolgt.

2. Verfahren nach Anspruch 1, **dadurch gekennzeichnet, dass** die Zustellung der Gegenstände von der Aufgabestelle aus durch das mit wenigstens einem Zustelldienst direkt oder indirekt verbundene Frankiersystem ausgelöst resp. abgewickelt wird.

3. Verfahren nach Anspruch 2, **dadurch gekennzeichnet, dass** einem Versandauftrag eine mit einem Zustelldienst vereinbarte Trackingnummer zugeteilt wird.

4. Verfahren nach Anspruch 3, **dadurch gekennzeichnet, dass** die Trackingnummer durch das Informationssystem dem Versandauftrag zugeordnet wird.

5. Verfahren nach einem der Ansprüche 1 bis 4, **dadurch gekennzeichnet, dass** zur Versandabwicklung eines Gegenstandes ein durch das Frankiersystem zu bestimmender Zustelldienst beauftragt wird.

6. Verfahren nach einem der Ansprüche 1 bis 5, **dadurch gekennzeichnet, dass** zwischen Aufgabestelle und Zustelldienst ein Abhol- oder Zubringdienst für die Gegenstände und/oder Güter vorgesehen ist.

7. Verfahren nach einem der Ansprüche 1 bis 6, **dadurch gekennzeichnet, dass** dem Frankiersystem ein mit wenigstens einem Zustelldienst verbundenes, als Verarbeitungs- und Leitsystem ausgebildetes Informationssystem zur Generierung, Speicherung und Uebertragung von zum Versand von Gegenständen und/oder Gütern bestimmten Daten zuschaltbar resp. dass das Frankiersystem mit dem Informationssystem verbunden ist.

8. Verfahren nach einem der Ansprüche 1 bis 7, **dadurch gekennzeichnet, dass** das Frankiersystem zur Versandauftragsabwicklung dem Informationssystem und einem Zustelldienst übergeordnet zuschaltbar resp. dass das Frankiersystem mit dem Informationssystem verbunden ist.

9. Verfahren nach einem der Ansprüche 1 bis 8, **dadurch gekennzeichnet, dass** ein Versandauftrag nach der Auftragsbearbeitung durch das Frankiersystem ausgelöst wird.

10. Verfahren nach Anspruch 9, **dadurch gekennzeichnet, dass** zur Ingangsetzung eines Versandauftrages an dem Frankiersystem eine One Touch- Funktion vorgesehen ist.

11. Verfahren nach einem der Ansprüche 1 bis 10, **dadurch gekennzeichnet, dass** das Frankiersystem über Internet mit dem Informationssystem verbunden ist.

12. Verfahren nach Anspruch 11, **dadurch gekennzeichnet, dass** die Daten zwischen Frankiersystem, Informationssystem und/oder einem Zustelldienst mittels Datenleitung übertragbar resp. austauschbar sind.

13. Verfahren nach Anspruch 11, **dadurch gekennzeichnet, dass** die Daten uni- oder bidirektional übertragbar resp. austauschbar sind.

14. Verfahren nach Anspruch 11 oder 13, **dadurch gekennzeichnet, dass** die von dem Informationssystem auf das Frankiersystem oder umgekehrt übertragenen Daten durch das Informations- und/oder das Frankiersystem veränderbar sind.

15. Verfahren nach Anspruch 13 oder 14, **dadurch gekennzeichnet, dass** das Informationssystem und das Frankiersystem mit einem rechenfähigen Steuerungsprogramm ausgerüstet resp. verbunden sind.

16. Verfahren nach einem der Ansprüch 13 bis 15, **dadurch gekennzeichnet, dass** an das Informationssystem über Datenleitungen von dem Frankiersystem abrufbare Daten eines Zustelldienstes übertragbar sind.

17. Verfahren nach Anspruch 16, **dadurch gekennzeichnet, dass** Daten mehrerer Zustelldienste zum Vergleich auf das Frankiersystem resp. die Frankiermaschine übertragen resp. von letzteren abrufbar sind.

18. Verfahren nach einem das Ansprüche 13 bis 17, **dadurch gekennzeichnet, dass** zur Bildung eines aufgrund eines Versandauftrages einen Versandgegenstand begleitenden, bedruckten Labels bzw. Etikette von dem Informationssystem generierte Daten an das Frankiersystem übertragbar sind.

19. Verfahren nach einem der Ansprüche 13 bis 18, **dadurch gekennzeichnet, dass** zwischen Frankiersystem und einem Zustelldienst Daten übertrag- und austauschbar sind.

20. Verfahren nach einem der Ansprüche 1 bis 19, **dadurch gekenzeichnet, dass** ein Zustelldienst mit einem die Versandgegenstände an der Aufgabestelle entgegennehmenden Abholdienst ausgestattet ist oder dass der Versandgegenstand durch einen Kurierdienst von der Aufgabestelle an den Zustelldienst überbracht wird.

21. Verfahren nach einem der Ansprüche 1 bis 20, **dadurch gekennzeichnet, dass** mehrere Frankiersysteme mit einem Informationssystem verbindbar sind.

22. Einrichtung zum Versand von mit einer wenigstens teilweise codierten Kennung versehenen Gegenständen und/oder Gütern, die von einer Frankiermaschine (3) einer Aufgabestelle (4) mittels wenigstens eines beauftragten Zustelldienstes (7 bis 10) an einen entfernten Bestimmungsort verschickt werden, **dadurch gekennzeichnet, dass** die Frankiermaschine (3) zur Versandabwicklung mit einer Daten resp. Informationen wenigstens eines Zustelldienstes (7 bis 10) verarbeitenden, Versanddaten für die Frankiermaschine (3) generierenden resp. zur Verfügung stellenden Informationseinrichtung (6) in Verbindung bringbar resp. verbunden ist.

23. Einrichtung nach Anspruch 22, **dadurch gekennzeichnet, dass** die Frankiermaschine (3) zur Erstellung der einen Versandauftrag begleitenden Dokumente ausgebildet ist.

24. Einrichtung nach Anspruch 22 oder 23, **dadurch gekennzeichnet, dass** die Frankiermaschine (3) als Informationsempfangs- und Verarbeitungsstelle ausgebildet ist.

25. Einrichtung nach einem der Ansprüche 22 bis 24, **dadurch gekennzeichnet, dass** die Frankiermaschine (3) einen Rechner und eine Internet-Schnittstelle zur Verbindung mit der Informationseinrichtung (6) aufweist.

26. Einrichtung nach einem der Ansprüche 22 bis 25, **dadurch gekennzeichnet, dass** die Frankiermaschine (3) zur Zeit- und Tarifoptimierung der zu verschickenden Güter ausgebildet ist.

27. Einrichtung nach einem der Ansprüch 22 bis 26, **dadurch gekennzeichnet, dass** die Frankiermaschine (3) mit Leitfunktionen für die Informationseinrichtung (6) und/oder einen Zustelldienst (7 bis 10) ausgebildet ist.

28. Einrichtung nach einem der Ansprüche 22 bis 27, **dadurch gekennzeichnet, dass** die mit der Frankiermaschine (3) ausgestattete Aufgabestelle (4) über die Informationseinrichtung (6) einem Abhol- oder Zubringdienst (12) verbunden ist.

29. Einrichtung nach einem der Ansprüche 22 bis 28, **dadurch gekennzeichnet, dass** die Frankiermaschine (3) mit der Informationseinrichtung (6) und den Zustelldiensten (7 bis 10) systemübergeordnet verbunden ist.

30. Einrichtung nach einem der Ansprüche 22 bis 29, **dadurch gekennzeichnet, dass** die zur Abwicklung eines Versandauftrages bestimmte Frankiermaschine (3) durch Datenübertragungsleitungen (13) mit der Informationseinrichtung (6) und einem Zustelldienst (7 bis 10) verbunden ist.

31. Einrichtung nach einem der Ansprüche 22 bis 30, **dadurch gekennzeichnet, dass** mehrere Frankiermaschinen (3) an eine mit Zustelldiensten (7 bis 10) verbundene Informationseinrichtung (6) angeschlossen sind.
